Europäisches Patentamt

(19) European Patent Office

Office européen des brevets

(11) EP 0 818 430 A1

## (12) EUROPEAN PATENT APPLICATION
published in accordance with Art. 158(3) EPC

(43) Date of publication:
14.01.1998 Bulletin 1998/03

(21) Application number: 96901134.5

(22) Date of filing: 29.01.1996

(51) Int. Cl.$^6$: C05F 11/08

(86) International application number:
PCT/JP96/00160

(87) International publication number:
WO 97/28102 (07.08.1997 Gazette 1997/34)

(84) Designated Contracting States:
DE FR GB NL

(71) Applicant: Sasaki, Seizo
Oota-ku, Tokyo 145 (JP)

(72) Inventor:
YANAGISAWA, Saburo,
Kowa Sangyo Co., Ltd.
Tokyo 153 (JP)

(74) Representative:
Fieret, Johannes, Ir. et al
Algemeen Octrooibureau,
World Trade Center,
P.O. Box 645
5600 AP Eindhoven (NL)

### (54) METHOD OF COMPOSTING PUTREFYING WASTE

(57) The present invention provides with a composting method for putrefactive wastes which can suppress bad odor produced during the fermentation and extremely shorten the time required for the fermentation. Putrefactive wastes are matured by Bacillus sp. Gallus X. The putrefactive wastes are crushed and kneaded into paste-like, whose temperature is raised by frictional heat caused by said crushing and kneading under poor oxygen to suppress the proliferation of microorganisms in the treated material. Then the treated material is in contact with air under high temperature, which starts the preferential proliferation of Bacillus sp. Gallus X in the treated material which has survived under said high temperature and poor oxygen.

EP 0 818 430 A1

**Description**

Background of the Invention

Field of the Invention

The present invention mainly relates to the treatment method to compost such livestock excretion as poultry manure and cow dung in a short time.

Description of the Prior Art

In the case of the treatment of putrefactive wastes mainly consisting of livestock excretion such as poultry, pig, cow and horse, it is generally adopted either to compost them or to utilize them as the material for reclamation. However, the reclamation is recently getting to be very difficult, because it is extremely hard to secure the place for the disposal. Therefore, the composting technology becomes the must for the treatment of the most putrefactive wastes.

Composting generally depends on natural fermentation. This method is characterized by forcible aeration to said wastes or turn them upside down several times , which are accumulated in a pit.

However, the fermentation tends to lean toward anaerobic condition because it is apt to proceed at low temperature and to generate odor, despite of the aeration to said wastes or turn of them upside down several times. Besides, natural fermentation takes a long period, for example, for 1 to 12 months, for the completion. Furthermore, in the case with chaff and/or wooden tips, the compost produced might cause abnormal fermentation after fertilization, because it is hardly difficult for them to be decomposed. Another problem is that natural fermentation is apt to cause heterogeneous fermentation and result in the prevention of the production of homogeneous compost.

There have recently been reported numerous techniques for the acceleration of fermentation of said putrefactive wastes by the addition of various microorganisms. Microorganisms added are the mixture of microorganisms isolated from forest soils or such a single species as Aspergillus oryzae or photosynthetic bacteria. The methods of the addition are roughly divided into two: the first is direct addition of microbial culture broth to said raw materials, and the second is to mix microorganisms immobilized in a proper carrier with said raw materials.

However, since these microorganisms belong to mesophile, said methods have the defect that the growth of mesophile is greatly inhibited by a high temperature generated by fermentation.

Furthermore, these methods cost expensive, because they need microorganisms which are not existed in said putrefactive wastes.

Object of the Invention

On the consideration of such problems of conventional techniques, the purpose of the present invention is to offer a composting method of putrefactive wastes with preventing the odor generated during the fermentation and of the great shortening of the fermentation period.

Another object of the present invention is to offer a composting method of putrefactive wastes to produce homogeneous compost with low cost and with no addition of foreign microorganisms.

Description of the microorganisms used in the present invention

The present invention is characterized by maturing putrefactive wastes with Bacillus sp. Gallus X ( referred to as "Gallus X" ) to achieve said object.

Gallus X was isolated from the compost made from said putrefactive wastes. The microbial characteristics of this strain was as follows.

1. Morphology

The cell was rod shaped with $1{\sim}2$ $\mu$m in diameter and $5{\sim}7$ $\mu$m in length. This microorganism showed active motility from the lag phase to middle log phase, but showed weak motility in the late log phase and almost failed to motile in the stationary phase. This microorganism produced a spore and showed gram variable.

2. Colony Properties ( at 55 °C )

| ① Nutrient Agar | | | | |
|---|---|---|---|---|
| | IFO | | | |
| | Gallus X | 12550 | 12983 | 13737 |
| Growth | Good | A little good | Poor Yellowish white transparent | Poor Yellowish white transparent |
| Color | Grayish white turbid | Yellowish white transparent | | |
| | IFO | | | |
| | Gallus X | 12550 | 12983 | 13737 |
| Shine | No | Yes | Yes | Yes |
| Diffusible pigment | No | No | No | No |
| ② Nutrient Slant Agar | | | | |
| Growth | Good | A little good | Poor | Poor |
| Color | Grayish white turbid | Yellowish white transparent | Yellowish white transparent | Yellowish white transparent |
| Shine | - | + | + | + |
| Diffusible pigment | - | - | - | - |
| ③ Nutrient Broth | | | | |
| Pellicle Formation | - | - | - | - |
| ④ Litmus Milk | | | | |
| pH-change | - | - | - | - |
| Clots | - | - | - | - |
| Liquefaction | - | - | - | - |

3. Physiological Properties

| | IFO | | | |
|---|---|---|---|---|
| | Gallus X | 12550 | 12983 | 13737 |
| ① Nitrate reduction | - | - | - | - |
| ② Denitrification | - | - | - | - |
| ③ MR | - | - | - | - |
| ④ VP | - | - | - | - |
| ⑤ Indole Production | - | - | - | - |
| ⑥ H2Production | - | - | - | - |
| ⑦ Starch Hydrolysis | + | + | + | + |
| ⑧ Citrate Utilization | | | | |
| Koser Citrate Medium | - | - | - | - |
| Christensen agar | - | - | - | - |

| | IFO | | | |
|---|---|---|---|---|
| | Gallus X | 12550 | 12983 | 13737 |
| ① Utilization of Inorganic Nitrogen | | | | |
| Nitrate | - | - | - | - |
| Ammonium salt | - | - | - | - |
| ② Production of Pigment | - | - | - | - |
| ③ Urease | - | - | - | - |
| ④ Oxidase | + | ± | + | + |
| ⑤ Catarase | - | - | - | - |
| ⑥ pH Range for Growth | | | | |
| pH4 | - | - | - | - |
| 5 | - | - | - | - |
| 6 | ++ | ++ | ++ | ++ |
| 7 | ++ | ++ | ++ | ++ |
| 8 | ++ | ++ | ++ | ++ |
| 9 | ± | ± | ± | ± |
| 10 | - | - | - | - |
| ⑮Growth at | | | | |
| 37°C | - | - | - | - |
| 45 | ++ | + | + | + |
| 50 | +++ | + | + | + |
| 55 | +++ | ++ | + | + |
| 60 | +++ | +++ | + | ++ |
| 65 | - | ++ | ++ | +++ |
| ⑯O-F test | Oxidative | Oxidative | Oxidative | Oxidative |

4. Utilization of carbon compounds and production of acids and gases

|  | Gallus X | 12550 | 12983 | 13737 |
|---|---|---|---|---|
| ① L-arabinose | - | - | - | - |
| ② D-xylose | - | - | - | - |
| ③ D-glucose | - | - | - | - |
| ④ D-mannose | - | - | - | - |
| ⑤ D-fructose | - | - | - | - |
| | IFO | | | |
| | Gallus X | 12550 | 12983 | 13737 |
| ⑥ D-galactose | - | - | - | - |
| ⑦ maltose | - | - | - | - |
| ⑧ sucrose | - | - | - | - |
| ⑨ lactose | - | - | - | - |
| ⑩ trehalose | - | - | - | - |
| ⑪ D-sorbitol | - | - | - | - |
| ⑫ D-mannitol | - | - | - | - |
| ⑬ inositol | - | - | - | - |
| ⑭ glycerol | - | - | - | - |
| ⑮ starch | - | - | - | - |

```
+++    Fairly good growth
++     Good growth
+      Moderate growth
±      Trace growth
-      No growth
```

5. Measurement of GC contents

GC contents of Gallus X were compared with those of Bacillus stearothermophilus IFO 12550.

① Strains

Gallus X and Bacillus stearothermophilus IFO 12550 were used in this test.

② Culture Conditions

Gallus X and Bacillus stearothermophilus IFO 12550 were inoculated in a liquid culture medium which includes Difco Heart Infusion Broth and 0.1% glucose. They were cultivated overnight at 50°C and 65°C in a shaking condition. Their growth conditions at 50°C and 65°C were compared and the culture showing better growth was used as a seed culture.

The seed cultures of said respective strains were inoculated at 10% in a fresh medium, which were cultivated for 5 hours at the temperature where the cultures showed good growth. These culture broth were used for the preparation of DNA for the measurement of their GC contents.

③ Extraction of DNA

(1) 10 ml of the specimen was centrifuged and the bacterial cells were collected, which were suspended well in saline-EDTA buffer. The suspension was centrifuged at 10,000xg for 10 minutes and the supernatant was discarded.

(2) The cells were quickly frozen with methanol-dry ice.

(3) 0.5 ml of lysozyme (2 mg/ml) -10 mM Tris - HCl (pH8.0) was added, and the mixture was incubated at 37°C for 30 minutes - 2 hours.

(4) 50 μl of Tris-SDS buffer was added to said mixture, mixed well and heated at 60°C for 5 minutes.

(5) 0.2 ml of 90 % of phenol was added and the mixture was shaken vigorously for 2 minutes.

(6) The mixture was cooled in an ice water bath. 0.2 ml of chloroform was then added and the mixture was shaken vigorously for 2 minutes.

(7) The mixture was centrifuged at 10, 000 xg for 5 minutes.

(8) 0.4 ml of the upper layer was sucked up gently so as not to suck up the intermediate layer and transferred into another polypropylene tube.

(9) 0.5 ml of chloroform was added and the mixture was shaken for 2 minutes. Then the mixture was centrifuged at 10, 000 xg for 5 miniutes.

(10) 0.3 ml of the upper layer was sucked up gently so as not to suck up the intermediate layer and transferred into another polypropylene tube.

(11) Said steps (9) and (10) were repeated again.

(12) 50 μl of RNase solution was added and the mixture was incubated at 37°C for10 minutes.

(13) 50 μl of Proteinase K solution was added and the mixture was incubated at 37°C for 20 minutes.

(14) 0.2 ml of 90% phenol and 0.2 ml of chloroform were added and the mixture was shaken for 1 minute.

(15) The mixture was centrifuged at 10, 000 xg for 5 minutes and 0.3 ml of the supernatant was transferred into another polypropylene tube.

(16) 0.7 ml of 99% ethanol was added and the mixture was shaken for 1 minute.

(17) The precipitation of DNA was washed with 70% ethanol and then 99% ethanol.

(18) The precipitate was dried up in a desiccator with reduced pressure.

④ Preparation of the specimen for the measurement of GC contents

(1) 50 μl of sterilized distilled water was added to the said step (18) specimen and the mixture was stood at 60°C for 1 hour. It was heated at 100°C for 5 minutes and then cooled rapidly.

(2) The mixture was transferred into polypropylene tubes 10 μl each.

(3) 10 μl of Nuclease P1 solution was added into each polypropylene tube. After the lid of each polypropylene tube was closed, the mixture was lightly filliped and then centrifuged at room temperature for several seconds.

(4) The mixture was incubated at 50°C for 1 hour.

(5) 10 μl of alkaline phosphatase solution was added into each said mixture. Afier the lid was closed, the mixture was filliped lightly to mix them and then centrifuged for several seconds.

(6) The mixture was incubated at 37°C for 1 hour.

(7) The solution thus prepared was used as a sample for HPLC.

⑤ Operational Condition of HPLC

(1) Column: L-column ODS produced by Chemical Inspection Association (Foundation)

(2) Elute: 0.2M NH4H2PO4 : Acetonitrile = 20 : 1

(3) Flow rate: 0.5 ml/min

(4) Detector: Ultraviolet spectrophotometer

(5) Wavelength for Detection: 260 nm

(6) Temperature: Room temperature

⑥ Calculation of GC contents

The GC contents was calculated by the following formula:

$$GC(mol\%) = (Gx + Cx) / Cx + Gx + Tx + Ax) \times 100$$

Gx (Cx, Tx, Ax) represent dGMP (dCMP, dTMP, dAMP) peak area of DNA digested by Nuclease P1.

Fig. 2 shows the ratio of the base composition of DNA prepared from Gallus X by HPLC. Peaks of dGMP, dCMP, dTMP and dAMP were found respectively at 5. 41, 5.70, 6.18 and 6.56.

Fig. 3 shows the ratio of the base composition of IFO 12550 DNA by HPLC. Peaks of dGMP, dCMP, dTMP and dAMP were found respectively at 5.37, 5.71, 6.19 and 6.57.

The values of GC contents of Gallus X and IFO 12550 calculated from these peaks were as follows:

| Microorganisms | GC contents (mol %) |
|---|---|
| Gallus X | 31.1 |
| IFO 12550 | 40.9 |

The comparison with said physiological characteristics shown in 2. Colony Properties (at 55°C) and GC contents showed that Gallus X was different from IFO 1 2983 and 13737 in all features of the colony characteristics, the temperature range for their growth and the motility, while Gallus X and B. stearothermophilus IFO 125 50 showed the similarity in the temperature range for their growth, but the GC contents of Gallus X and IFO 12550 resulted in about 10% difference.

From these results, Gallus X was identified as a new species of Genus Bacillus and designated as Bacillus sp. Gallus X.

This microorganism has been deposited as "Deposited Number FERM P-14331 in Fermentation Research Institute " at National Research Laboratory for Life Science, Agency of Industrial Science and Technology.

The present invention has the characteristics that the fermentation of putrefactive wastes is carried out by the proliferation of Gallus X. The method is as follows. First, the putrefactive wastes are crushed and kneaded into paste. Second, the temperature of the wastes increases by the frictional heat produced by crushing and kneading or by heating under anaerobic condition. Third, the increase of the temperature kill odor producers like facultative anaerobic bacteria. Fourth, keeping the high temperature, said putrefactive wastes are fermented by Gallus X, which survived in said high temperature and poor oxygen, under aerobic condition to produce fermented fertilizer.

The raw materials treated by the present invention include not only the excretion of livestock but all of organic, putrefactive wastes such as surplus sludge and slurry resulting from tap and sewage waters and residuals from food and drink.

In order to crush and knead the putrefactive wastes into slurry, we use, for instance, a cylinder equipped with force feed screwed member and crushing teeth with loading opening at one end and unloading opening at the other. In this cylinder which is horizontally installed, said putrefactive wastes loaded from the loading opening are fed under high pressure toward said unloading opening. As a result, the putrefactive wastes are packed into every nook and corner of the cylinder. Therefore, the putrefactive wastes are kneaded in the pressure under the condition that their contact with air is extremely suppressed, that is, almost anaerobic condition. This condition produces high frictional heat.

It is preferred that the water content of said putrefactive wastes is adjusted to 50 to 60% before they are loaded into said cylinder. Though this water adjustment can be made by adding dry livestock excreta to the putrefactive wastes, it is more preferable that the adjustment is carried out by the addition of the fermented materials produced by the present invention. Though the best temperature range for the fermentation is from 50 to 60°C, during which Gallus X proliferates preferably, temperature range from 45 to 70°C can be permitted. The temperature adjustment may be done by either varying the production of frictional heat by regulating the rotational speed of the screwed member in said treatment chamber or adopting such external thermal system as heater.

The putrefactive wastes discharged from the cylinder are powdered under aerobic condition and high temperature, in which Gallus X is dominantly proliferated. Gallus X used in the present invention can be supplied as not only the bacteria survived under high pressure and poor oxygen in the raw putrefactive wastes, but the bacteria in the fermented putrefactive wastes added as the bacterial source. The bacteria added as the bacterial source are a culture broth, a liquid suspension of living bacteria, a solid of living bacteria and dried bacteria. The amount of bacteria added the addition is not regulated.

In the present invention, the putrefactive wastes are powdered and kneaded into paste form under oxygen free condition with Gallus X which is added as foreign bacteria or exists in the putrefactive wastes in itself. During and after this process, the putrefactive wastes are heated without oxygen or with extremely small amount of oxygen, where any growth of such microorganisms as aerobic bacteria or facultative anaerobic bacteria is not allowed.

The putrefactive wastes sufficiently crushed and kneaded to the extent that the components of their materials become homogeneous under no or extremely poor oxygen condition and are powdered under aerobic condition keeping high temperature. In the following fermentation process under aerobic condition, therefore, such microorganisms as facultative anaerobic bacteria involved in the production of bad odor substances are kept to be prevented from proliferation. When, on the other hand, air is supplied to said wastes, the proliferation of Gallus X which is aerobic and thermotolerant and whose proliferation has been suppressed starts quickly.

Since any coarse organic matter mingling into the putrefactive wastes is fractionated by crushing and kneading, and since the organic matter and Gallus X are distributed uniformly in the putrefactive wastes with suitable amount of water, the fermentation proceeds smoothly.

Embodiment of Working of the Invent- ion

Some working examples on the present invention will be described in detail.

Embodiment 1

1,000 kg of cow dung containing about 75% of water and 800 kg of cow dung compost containing about 20% of water were loaded into the cylinder No. 1. They were mixed to about 56% of water content. Then, they were fed gradually toward the discharge port by rounding blades. At the same time, the pressure was raised as they were pushed back by opposed blades to crush and knead them. The temperature of the putrefactive wastes rises rapidly by the frictional heat accompanying the kneading, and the putrefactive wastes will fill every nook and corner of the treatment tank as paste.

The putrefactive wastes discharged from the cylinder No. 1 is loaded into the cylinder No. 2, where the putrefactive wastes was crushed and mixed enough in air under high temperature, which began the fermentation. After the initial fermentation, the putrefactive wastes were taken out of the cylinder No. 2, and the temperature was measured 4 to 5 hours later. The temperature of fermented material was 70°C. The mixture was turned up side sown daily for 4days, and the mixture resulted in compost.

Table 1 shows the results of the analysis of the components of said composting material.

Table 1

| Analysis of fertilizing components of the cow dung compost manufactured by the method of the present invention | | |
|---|---|---|
| Items | Values | Analytical Methods |
| Total nitrogen | 1.09% | Kjeldahl's method |
| Phosphorus | 0.32% | Vanadomolyodenic acid absorption spectrophotometric method |
| Potassium | 1.38% | Atomic absorption spectrophotometric method |
| Carbon-Nitrogen rate | 17 | |
| pH* | 8.5 | |

* Source: "Analytical Method for Fertilizer" by National Institute of Agro-environmental Science, Ministry of Agriculture, Forestry and Fisheries

Compared with the mean values of cow dung compost, total nitrogen 2.3%, phosphorus 4.9%, potassium 0.4% and carbon-nitrogen rate 14.1%, compost prepared by the present invention shows lower nitrogen and phosphorus contents and higher carbon-nitrogen rate.

The cow dung compost should be applied carefully to usual crops, in particular, to seed crops, because it has a higher concentration of the components than heaped manure. However, the compost by the present invention has succeeded in overcoming this problem, so that it can be fertilized more easily.

Some characteristics of the microorganisms isolated from the putrefactive wastes and said composts will be described in detail.

Materials and Methods

1. Preparation of Specimens
0.1g of each compost was put into different test tube, to which 1 ml each of saline was added. Each test tube was stirred vigorously for 5 minutes and stood out. The supernatant was used as the specimen.
2. Viable Count
The number of living bacteria was counted by agar dilution method. Nutrient agar was used for the isolation of common bacteria, and potato dextrose agar was used for the isolation of fungi and yeasts.
3. Demand of Oxygen
Determination of aerobic or facultative anaerobic bacteria was carried out by putting the isolates in BBL's Gas Pack Jar with Anaeropack of Mitsubishi Gas Chemical Co., Inc.. O-F Test was also carried out by said determination.

4. Optimal Growth Temperature
The measurement of the growth temperature was carried out by Sanyo Incubator MR1 52.

5. Determination of Intestinal Bacteria
The intestinal bacteria was evaluated as the facultative anaerobic and oxydase negative bacteria.

Table 2

| Viable count of raw material and composted material | | | |
|---|---|---|---|
| Culture medium | Materials | Number of Bacteria ( Cells / g ) | |
| | | 28°C | 55°C |
| Nutrient Agar Medium | Raw Material | 1.0 x 109 | 1.0 x 106 |
| | Composted Material | 8.8 x 108 | 1.7 x 108 |
| ( Since the colony surfaces and the number of bacteria on potato dextrose agar medium were almost the same as those of nutrient agar, the data on potato dextrose agar have been omitted. ) | | | |

Table 2 shows the results of the number of microorganisms living in putrefactive wastes and composted materials by dilution method using nutrient agar medium.

The number of the bacteria which can proliferate at 28°C was 1.0 x 109 cells per gram of putrefactive wastes and 8.8 x 108 cells per gram of the compost. In other words, the number of bacteria tends to reduce slightly after the fermentation of the putrefactive wastes. This tendency suggests that the microorganisms continue to grow utilizing the organic matters in the putrefactive wastes and reduce the number after the consumption of said organic matters. In other words, the number of microorganisms increase very rapidly in the rich nutrient of putrefactive wastes and rapidly decrease the number because of starving to death in the lack of nutrient. Since the microorganisms thus starved to death are eaten up by the surviving ones, the decrease of the number of microorganisms stops and the number will be maintained.

This is a common phenomenon observed in compost and soil, which suggests that the compost by the present invention is nearly complete maturity.

In any material used in the present invention, almost all the microorganisms growing at 28°C were bacteria. However, from the viewpoint of the type of bacteria, there was a considerable difference between those in the putre 1 factive wastes and the compost. That is, the dominant bacteria in the putrefactive wastes were gram negative bacteria including the bacteria forming a red colony which is supposed to be photosynthetic bacteria belonging to genus Rhodopseudomonas, while the gram positive bacteria belonging to genus Bacillus were extremely few ( refer to Table 3 ). The facultative anaerobes were counted 5.0 x 105 cells / gram of the specimen (only 0.2% of total isolates in the putrefactive wastes). The most of isolates were, therefore, aerobic bacteria ( Table 3 ). On the other hand, though the colony surfaces of the microorganisms in the compost were similar to those in the raw materials, the number of the facultative anaerobes in the compost was about on-tenth ( Table 3 ). This reduction might have been caused by the fermentation heat. The colony sizes of the facultative anaerobic bacteria were small or pin-point colonies in all materials.

Table 3

| Characteristics of bacteria isolated from a raw material and the compost | | |
|---|---|---|
| Temperature for Isolation ( °C ) | Isolated Microorganisms | Number of Isolates (Number of cells / gram of specimen) |
| 28 | Gram negative aerobes | 1.0 x 109 | 8.8 x 108 |
| | Bacillus sp | 2.0 x 104 | 2.0 x 104 |
| | Facultative anaerobes | 5.0 x 105 | 3.0 x 104 |
| | Photosynthetic bacteria | 1.4 x x106 | <10 |
| 55 | Gram negative aerobes | <10 | <10 |
| | Bacillus sp. | 2.0 x 106 | 2.0 x x108 |
| | Facultative anaerobes | <10 | <10 |
| | Photosynthetic bacteria | <10 | <10 |

As was the case with the cultures at 28°C, most of the microorganisms proliferating at 55°C were bacteria. The number of microorganisms was 106 cells / gram of a putrefactive waste, but increased to 108 cells / gram of the compost ( Table 3 ). The number of bacteria growing at 55°C ( thermophilic bacteria or thermotolerant bacteria ) was about 1/10 of the bacteria growing at 28°C ( mesophilic bacteria which can be isolated most commonly from natural environment, including the group of intestinal bacteria that produce foul odor ). This fact suggests that the fermentation, as a whole, progressed mainly by these mesophilic bacteria. On the other hand, the number of bacteria growing at 55°C in the compost has was about 100 times higher than that in the raw material ( Table 3 ). These results strongly suggest that the fermentation heat was produced during the fermentation period and that thermophilic or thermotolerant bacteria are involved in the fermentation.

The putrefactive wastes exuded strongly bad odor of feces, but the compost emitted weak smell of soil without any odor of feces. This result shows that the compost has been completely matured.

As has been described, the microorganisms isolated from the respective materials were dominantly bacteria. Neither fungi nor yeast were isolated.

The growth temperature range of the bacteria so far isolated showed that bacteria which do not multiply at 37°C but grow well at 55°C were isolated from the compost. This strain was a gram variable, aerobic rod bacteria forming spores. This result suggested that the strain might be Bacillus stearothermophilus ( Table 4 ).

Three strains of B. stearothermophilus IFO 12550, 0,983 and 13737 were procured from Fermentation Research Institute and compared with each other. Though IFO 12550 was similar to Gallus X in the growth temperature range, the other two strains showed notable difference from Gallus X in the growth temperature range, the motility and the colonial characteristic.

Table 4

| Characteristics of Bacillus sp. Gallus X | | |
|---|---|---|
| | Bacillus sp. Gallus X | Bacillus stearothermophilus |
| Gram staining | Gram variable | Gram variable |
| Morphology | rod | rod |
| Size | 0.8 x 4 ~ 6 | 0.4 ~ 0.6 x 2 ~ 5 |
| Oxygen requirement | aerobic | aerobic |
| Spore formation | + | + |
| Growth at 28°C | - | - |
| 55°C | ++ | ++ |
| 65°C | - | ++ |

The reasons why the odor of feces goes off in this fermentation process are that the multiplication of facultative anaerobes including the intestinal bacteria is regulated by the fermentation heat and that the fermentation is continued by the Gallus X in feces.

Embodiment 2

Fermentation was started after 1000 kg of the cow dung, containing about 75% of water and 430g of chaff containing about 14% of water were treated in Gallus plant by a similar fashion to that in Embodiment 1. Four to five hours later, the fermentation heat raised at about 70°C. The materials were turned upside down every day for one week to 10 days to be composted.

Embodiment 3

1000kg of poultry manure containing about 75% of water and 450kg of chaff containing about 14% of water were treated in Gallus plant as was the case with Embodiment 1. The mixture was in contact with air under high temperature and the fermentation was started. When 4 to 5 hours later, the fermentation heat raised at about 65°C. Then the material was turned upside down every 2 days for 7 consecutive days to be composted.

Embodiment 4

Scallop containing about 80% of water and wheat straw containing about 20% of water were mixed at the rate of 60:40 and treated by Gallus plant as was the case with Embodiment 1. This mixture was put into a perforated box under high temperature and the fermentation was started. Four to five hours later, the temperature of fermented material raised at 65°C by fermentation heat. The material was piled up outdoor for 7 days without turning upside down to be composted.

Embodiment 5

Straw with about 60% of water used in a stable was treated by Gallus plant in the same fashion as in Embodiment 1, and was in contact with air under high temperature and the fermentation was started. Four to five hours later, the fermentation heat raised at about 65°C. Then, the material was turned upside down every 2 days for 5 days to be composted.

Embodiment 6

1000kg of pig feces containing about 85% of water and 550kg of chaff by containing 14% of water were treated by Gallus plant in the same fashion as in Embodiment 1, and put into a perforated box under high temperature. The box was aerated from the bottom to let the fermentation start. Four to five hours later, the fermentation heat raised at about 65°C, which made the raw material composted seven days later.

An example applying the material composted by the method of the present invention to the cultivation of soybean will be described.

1. Methods

(1) Test Crop Plant: Soybean ("Fukuyutaka")
(2) Test Period: July to November, 1990
(3) Test area

Fertilizing test was performed in 9 test areas, which were detailed in Table 5. Test areas 1 to 3 were used as the areas fertilized the compost produced by the present invention. In the test area1, 250kg of this compost was fertilized in 10a. In the test area 2, 500kg of this compost was fertilized. In the test area 3, 500kg of the same compost plus 50kg of charcoal were fertilized. The carbon/nitrogen ratio (C/N ratio) of the compost used in this test was 17, and the nitrogen (N), phosphate (P) and potassium (K) contents were 1.09, 0.32 and 1.38% respectively.

In test area 4 to 6, the pig feces composted by the method of the present invention were applied; 250kg of said compost per 10 a was applied in test area 4, and 500kg of the same compost was used for 10 a in test area 5, and 500 kg of the same compost plus 50 kg charcoal per 10a were applied in test area 6. The nitrogen (N), phosphate (P) and potassium (K) contents of said composted pig feces used in this test were 1.30, 0.62 and 0.48% respectively.

Test areas 7 and 8 were the fields used the cow dung produced by conventional technique. There was applied 250 kg of this compost for 10 a in the test area 7, and applied 500 kg of this compost in the test area 8. The carbon/nitrogen ratio (C/N ratio) of said compost used in this test was 15.5, and the nitrogen (N) , phosphate (P) and potassium (K) contents were 0.45, 0.65 and 0.6 5% respectively.

The test area 9 is no compost application zone, where only basal fertilizer was applied.

Table 5

| Details of the test in the present invention | | | |
|---|---|---|---|
| No Experimental Area | Material used Amount used (Kg/10a) | Scale | |
| 1 The compost from cow dung by the present invention 250 | The compost form cow dung by the present invention C/N 17 | 250 | 44 m2/area |
| 2 said compost 500 | NI. 09, PO432, KI. 38% | 500 | |
| 3 said compost 500 + charcoal | | 500+charcoal 50 | |
| 4 The compost from pig feces by the present invention 250 | The compost from pig feces by present invention | 250 | |
| 5 said compost 500 | NI. 3, PO4 62, K48% | 500 | |
| 6 said compost 500 + charcoal | | 500+charcoal 50 | |
| 7 The compost from cow dung by conventional technique 250 | | 250 | |
| 8 said compost 500 no compost | | 500 | |
| 9 None | | | |

(4) Outline of Field

1) Plowing: Plowed to 10 cm of depth by tractor lorry on July 6th.
2) Seeding: 4.8 plants per square meter ( 75 cm x 28 cm), Dibbling three grains at one point on July 7th.
3) Application: Basal dressing per square meter, PK compound (20%p, 20%k) 30 kg/10 a on July 7th.
4) Intertillage earthing up: By managing implement fist on July 20th, second on August 8th
5) Prevention of Plant disease

1st on August 20th with dust "Ministop M" 4kg/10 a
2nd on August 31st, with the dust cartap , 4kg/10 a
3rd on September 15th, with methomyl wettable powder x 1, 000 solution

4th October 1st, with methomyl wettable powder x 1, 000 solution

5th on October 15th, with methomyl wettable powder x 1, 000 solution

2. Results and Discussion

Table 6 shows the results of said experiment.

(1) The application of the compost from cow dung and pig feces by the method of the present invention generally caused the higher growth rate and the more yield than those of no application area.

(2) For the application amount, the highest percentage of ripening was given by 50 0 kg of the compost from the cow dung by the method of the present invention, and by 250 kg of the compost from pig feces by the method of the present invention.

(3) In the test area where 500 kg of the compost from cow dung or pig feces composted by the method of the present invention, the application of charcoal increased both of the percentage of the ripening and the yield.

(4) From these results, it has turned out that an application of 500 kg of the compost from cow dung by the method of the present invention increases the yield, but the concomitant use of charcoal further increased the yield. 500 kg of the compost from pig feces by the method of the present invention proliferated the growth, but decreased the yield due to poor grain filling.

However, it was proved that the concomitant use of charcoal prevents this poor filling to increase the yield.

Industrial Availability

Because the present invention has the effect of the increase of Gallus X in putrefactive wastes in order to produce the compost from said wastes, the putrefactive wastes can be composted very homogeneously and very economically.

Because the present invention accelerates the fermentation of putrefactive wastes by preferential proliferation of Gallus X and because it sterilizes the facultative anaerobes in the putrefactive wastes or prevents growth of them, it can be used as a composting method without foul odor.

Furthermore, since the present invention has the effect that it makes the putrefactive wastes crushed and kneaded, and accelerates the fermentation under high temperature, a homogeneous compost can be produced.

Brief Explanation of Drawings

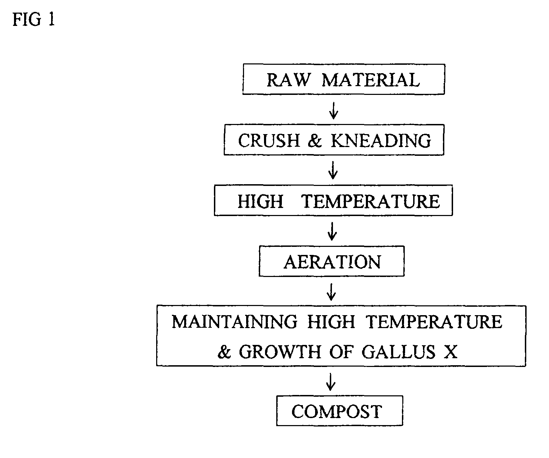

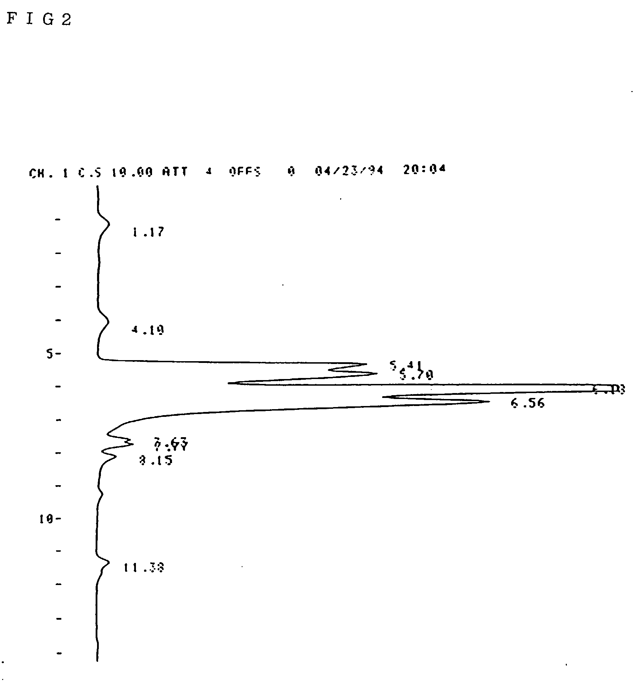

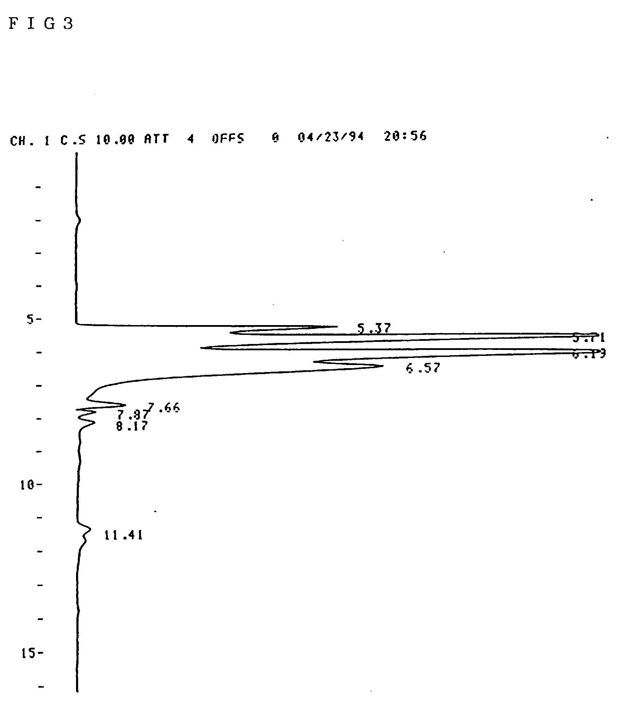

Fig. 1 represents a flowsheet of the treatment method of putrefactive wastes by the present invention. Fig. 2 represents the base composition ratio of Gallus X by HPLC. Fig. 3 represents the base composition ratio of B. stearothermophilus IFO 12550 by HPLC.

**Claims**

1. A composting method of putrefactive wastes characterized by the maturation using Bacillus sp. Gallus X.

2. A composting method of putrefactive wastes characterized by that said putrefactive wastes are crushed and kneaded into paste-like material, in which the multiplication of microorganisms is suppressed by frictional heat caused by said crushing and kneading or by artificial heating under poor oxygen and that said treated material is in contact with air under high temperature to start the preferential proliferation of said Bacillus sp. Gallus X survived in said treated material under said high temperature and poor oxygen.

3. The composting method for putrefactive wastes claimed in Claim 2, characterized by that Bacillus sp. Gallus X is added to said putrefactive wastes or treated material as foreign bacteria before said treated material is in contact with air.

4. The composting method for putrefactive wastes claimed in Claim 2 or 3, characterized by that the temperature of the putrefactive wasted is maintained from 40 °C to 70°C.

5. The composting method for putrefactive wastes claimed in any of Claims 2 to 4, characterized by that the water content of the putrefactive wastes is adjusted from 50 to 65%.

FIG 1

```
        ┌──────────────────────┐
        │    RAW  MATERIAL      │
        └──────────────────────┘
                   ↓
        ┌──────────────────────┐
        │   CRUSH & KNEADING    │
        └──────────────────────┘
                   ↓
        ┌──────────────────────┐
        │  HIGH  TEMPERATURE    │
        └──────────────────────┘
                   ↓
          ┌──────────────────┐
          │    AERATION       │
          └──────────────────┘
                   ↓
    ┌──────────────────────────────────┐
    │ MAINTAINING HIGH TEMPERATURE      │
    │   & GROWTH OF GALLUS X            │
    └──────────────────────────────────┘
                   ↓
          ┌──────────────────┐
          │    COMPOST        │
          └──────────────────┘
```

F I G 2

CH. 1 C.5 19.00 ATT 4 OFFS 0 04/23/94 20:04

F I G 3

CH. 1 C.S 10.00 ATT 4 OFFS 0 04/23/94 20:56

5.37

5.71

6.13

6.57

7.66
7.87
8.17

11.41

## INTERNATIONAL SEARCH REPORT

| International application No. |
|---|
| PCT/JP96/00160 |

| A. CLASSIFICATION OF SUBJECT MATTER |
|---|
| Int. Cl$^6$ C05F11/08 |

According to International Patent Classification (IPC) or to both national classification and IPC

| B. FIELDS SEARCHED |
|---|

Minimum documentation searched (classification system followed by classification symbols)

Int. Cl$^6$ C05F11/08, C05F3/00, C05F17/00

Documentation searched other than minimum documentation to the extent that such documents are included in the fields searched

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| EX | JP, 8-26873, A (Kowa Sangyo K.K.), January 30, 1996 (30. 01. 96), Claim (Family: none) | 1 - 5 |
| A | JP, 3-159981, A (Takano K.K.), July 9, 1991 (09. 07. 91), Claim (Family: none) | 1 - 5 |

☐ Further documents are listed in the continuation of Box C.   ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| April 16, 1996 (16. 04. 96) | April 23, 1996 (23. 04. 96) |

| Name and mailing address of the ISA/ | Authorized officer |
|---|---|
| Japanese Patent Office | |
| Facsimile No. | Telephone No. |

Form PCT/ISA/210 (second sheet) (July 1992)